# EUROPEAN PATENT APPLICATION

(11) **EP 2 565 366 A2**
(43) Date of publication of application: **06.03.2013**
(21) Application number: 12181148.3
(22) Date of filing: 21.08.2012
(51) Int. Cl.: E21B 33/035, E21B 33/06

(54) **Method, device and system for monitoring subsea components**

(30) Priority: 30.08.2011 US 201113221065
(71) Applicant: Hydril USA Manufacturing LLC, Houston, TX 77032 (US)
(72) Inventor: Ebenezer, Joseph Prem, Houston, TX Texas 77032 (US)
(74) Representative: Illingworth-Law, William Illingworth

(57) **Abstract**

A system, device and method of monitoring components of a BOP of a subsea well. The method includes grouping, by the control device, two or more of a plurality of BOP components into a test group; receiving, by the control device, one or more actual BOP component profiles from the grouped BOP components in the test group; and analyzing, by the control device, the received one or more actual BOP component profiles. The two or more BOP components may be solenoid valves, flow meters, transducers, other devices, or a combination therein. The method includes grouping, by the control device, two or more of a plurality of BOP components into a test group; receiving, by the control device, one or more actual BOP component profiles from the grouped BOP components in the test group; and analyzing, by the control device software for the testing Pods, the received one or more actual BOP component profiles.

## Description

### BACKGROUND

### TECHNICAL FIELD

Embodiments of the subject matter disclosed herein generally relate to methods and systems and, more particularly, to mechanisms and techniques for monitoring a component of a subsea control module.

### DISCUSSION OF THE BACKGROUND

Subsea oil and gas exploration becomes more challenging as the exploration depth increases. Complex devices are disposed on the ocean floor for extracting the oil and for the safety of the oil equipment and the environment. These devices have to withstand, among other things, high pressures (from 3,000 to 60,000 psi (200 to 4000 bar) or more) and highly corrosive conditions. Although precautions are taken when building these devices, component parts of these devices wear out with time and need to be replaced.

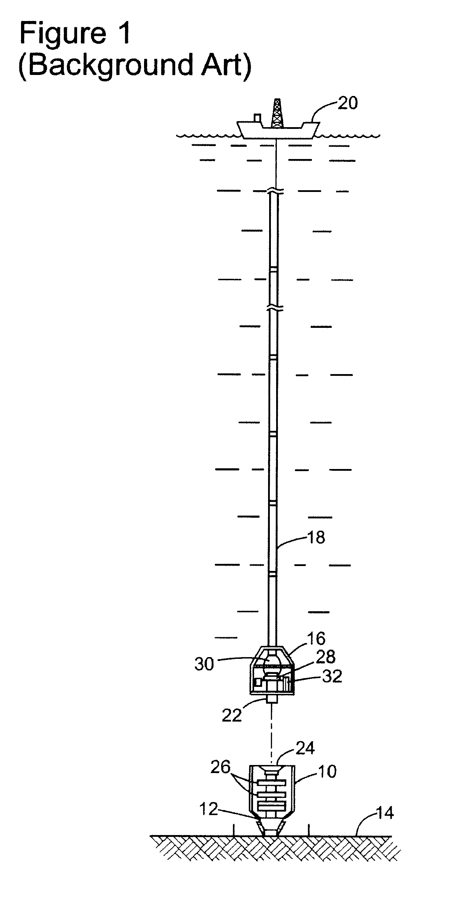

As these parts are disposed on the ocean floor (sometimes more than 2000 m below sea level) and sometimes are provided inside larger components, access to them may be problematic. For example, Figure 1 illustrates a lower blowout preventer stack ("lower BOP stack") 10 that may be rigidly attached to a wellhead 12 upon the sea floor 14, while a Lower Marine Riser Package ("LMRP") 16 is retrievably disposed upon a distal end of a marine riser 18, extending from a drill ship 20 or any other type of surface drilling platform or vessel. As such, the LMRP 16 may include a stinger 22 at its distal end configured to engage a receptacle 24 located on a proximal end of the lower BOP stack 10.

In some configurations, the lower BOP stack 10 may be rigidly affixed atop the subsea wellhead 12 and may include (among other devices) a plurality of ram-type BOPs 26 useful in controlling the well as it is drilled and completed. The flexible riser provides a conduit through which drilling tools and fluids may be deployed to and retrieved from the subsea wellbore. Ordinarily, the LMRP 16 may include (among other things) one or more ram-type BOPs 28 at its distal end, an annular BOP 30 at its upper end, and a multiplex (MUX) pod (in some configurations, two pods, which may be referred to in the industry as blue and yellow pods) 32.

When desired, the ram-type blowout preventers of the LMRP 16 and the lower BOP stack 10 may be closed and the LMRP 16 may be detached from the lower BOP stack 10 and retrieved to the surface, leaving the lower BOP stack 10 atop the wellhead. Thus, for example, it may be necessary to retrieve the LMRP 16 from the wellhead stack in times of inclement weather or when work on a particular wellhead is to be temporarily stopped.

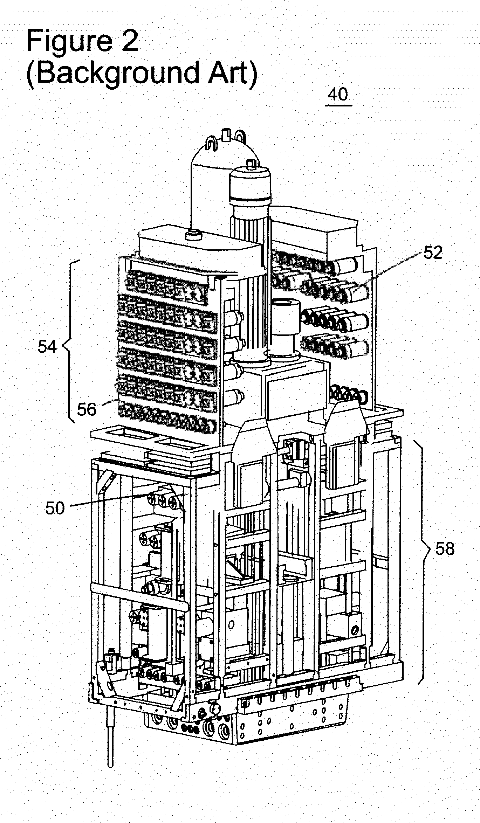

Also, when a part of the LMRP 16 fails, the entire LMRP 16 may need to be raised on the ship 20 for repairs and/or maintenance. One such part that may require maintenance from time to time is the MUX pod 32. A conventional MUX pod system 40 is shown in Figure 2 and may provide between 50 and 100 different functions to the lower BOP stack and/or the LMRP and these functions may be initiated and/or controlled from or via the LMRP.

The MUX pod 40 is fixedly attached to a frame (not shown) of the LMRP and may include hydraulically activated valves 50 (called in the art sub plate mounted (SPM) valves) and solenoid valves 52 that are fluidly connected to the hydraulically activated valves 50. The solenoid valves 52 are provided in an electronic section 54 and are designed to be actuated by sending an electrical signal from an electronic control board (not shown). Each solenoid valve 52 is configured to activate a corresponding hydraulically activated valve 50. The MUX pod 40 may include pressure sensors 56 also mounted in the electronic section 54. The hydraulically activated valves 50 are provided in a hydraulic section 58 and are fixedly attached to the MUX pod 40 (i.e., a ROV vehicle cannot remove them when the same is disposed on the seafloor).

In some subsea BOP installations, multiplex ("MUX") cables (electrical) and/or lines (hydraulic) transport control signals (via the MUX pod and the pod wedge) to the LMRP 16 and lower BOP stack 10 devices so specified tasks may be controlled from the surface. Once the control signals are received, subsea control valves are activated and (in most cases) high-pressure hydraulic lines are directed to perform the specified tasks. Thus, a multiplexed electrical or hydraulic signal may operate a plurality of "low-pressure" valves to actuate larger valves to communicate the high-pressure hydraulic lines with the various operating devices of the wellhead stack.

Examples of communication lines bridged between LMRPs and lower BOP stacks through feed-thru components include, but are not limited to, hydraulic choke lines, hydraulic kill lines, hydraulic multiplex control lines, electrical multiplex control lines, electrical power lines, hydraulic power lines, mechanical power lines, mechanical control lines, electrical control lines, and sensor lines.

In conventional MUX pods, when one or more of the solenoid valves 52 or any of the various other instruments and components requires service or replacement, which happens from time to time, the whole MUX pod 40 has to be brought to the surface. However, as the MUX pod 40 may include plural components, each component needs to be verified. This operation is disrupting for the functioning of the well as the drilling or oil extraction has to be stopped, which involves production losses.

Reliability issues and associated statistical analyses associated with deepwater BOP control systems are discussed in "Deepwater BOP Control Systems - A Look at Reliability Issues" by Shanks et al., the entire contents of which are incorporated herein by reference. Accordingly, it would be desirable to provide a capability that checks the components of the BOP faster, to allow for greater predictability in component failure and greater schedule flexibility in component repair.

### SUMMARY

According to one exemplary embodiment, there is a method of monitoring components of a blowout preventor (BOP) of a subsea well. The method includes grouping, by the control device, two or more of a plurality of BOP components into a test group; receiving, by the control device, one or more actual BOP component profiles from the grouped BOP components in the test group; and analyzing, by the control device, the received one or more actual BOP component profiles. The two or more BOP components may be solenoid valves, flow meters, transducers, other devices, or a combination therein.

In one embodiment, the step of analyzing includes one of: determining if any of the grouped BOP components is operating out of specified norms; and determining whether any of the grouped BOP components has experienced an actual failure or is liable to experience an imminent failure.

In one embodiment, a modeled and/or measured baseline BOP component profile for each of the two or more of a plurality of BOP components is stored in a memory. Optionally, the received one or more actual BOP component profiles to a corresponding one of the stored baseline BOP component profiles. This comparison may include an automatic change detection analysis. This comparison may be used to identify changes in the profiles that are indicative of component wear or failure. The analysis may include an analysis of only a portion of the received one or more actual BOP component profiles, or may include an analysis of an entirety of the received one or more actual BOP component profiles. The analysis may include predicting a BOP component end-of-life based on the received one or more actual BOP component profiles.

The two or more BOP components may be two or more BOP transducers, two or more BOP flow meters, two or more BOP solenoid valves, two or more other BOP devices or a combination therein. When the two or more BOP components are two or more BOP solenoid valves, each of the one or more actual BOP component profiles include at least a portion of a corresponding solenoid current profile.

The method may include at least one of a) displaying the received one or more actual BOP component profiles; b) producing a visible or audible alarm based on the received one or more actual BOP component profiles; c) transmitting information related to the received one or more actual BOP component profiles to a remote device; and d) receiving control commands from the remote device.

According to another embodiment, there is a control device that is configured to remotely monitor components of a blowout preventor (BOP) of a subsea well. The control device may include: an interface device configured to connect the control device to the BOP via an undersea electrical connection; a memory; a display panel; and a processor operatively connected to the interface device, the memory, and the display panel. The processor may be configured to group two or more of a plurality of BOP components into a test group; receive one or more actual BOP component profiles from the grouped BOP components in the test group; and analyze the received one or more actual BOP component profiles.

According to another embodiment, there is a system configured to remotely monitor components of a blowout preventor (BOP) of a subsea well. The system includes: a subsea device including a blowout preventer configured to close a bore that fluidly communicates with the subsea well; and a control device electrically connected to components of the blowout preventer via an undersea electrical connection. As noted above, the control device may include: an interface device configured to connect the control device to the BOP via an undersea electrical connection; a memory; a display panel; and a processor operatively connected to the interface device, the memory, and the display panel. The processor may be configured to group two or more of a plurality of BOP components into a test group; receive one or more actual BOP component profiles from the grouped BOP components in the test group; and analyze the received one or more actual BOP component profiles.

According to still another exemplary embodiment, there is a non-transitory computer readable medium containing instructions configured to cause a computing device to execute the method described above.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional offshore rig;
Figure 2 is a schematic diagram of a MUX pod;
Figure 3 is a generic current profile of a solenoid;
Figure 4 is a current profile of a Generation I solenoid being energized at different times during the life of the solenoid;
Figure 5 is a current profile of a Generation I solenoid being de-energized at different times during the life of the solenoid;
Figure 6 is a current profile of a Generation II solenoid being energized and de-energized at different times during the life of the solenoid;
Figure 7 is a block diagram of a control device according to an embodiment of the invention; and
Figure 8 is a flow chart according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a BOP stack. However, the embodiments to be discussed next are not limited to BOP stacks, but may be applied to other elements, e.g., LMRP, that are located in difficult to reach locations.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, a subsea structure is operated by providing a predetermined number of functions. These functions are achieved by actuating valves or other components. The health status of these components is verified by grouping (e.g., not physically grouping but rather selecting in a group a number of disparate valves to be checked as a block) predetermined number of valves (e.g., solenoids) together and performing the health status as a group and not one by one. The operator of the BOP has the capability to group (e.g., based on a software interface) the components as desired and to run the health check of the entire group by the push of a single button. In this way, the time taken for running the health status is reduced. Further details are provided below.

One skilled in the art knows that an electric current through a conductor will produce a magnetic field at right angles to the direction of electron flow. If that conductor is wrapped into a coil shape, the magnetic field produced will be oriented along the length of the coil. The greater the current, the greater the strength of the magnetic field, all other factors being equal. A solenoid is a device that produces mechanical motion from the energization of an electromagnet coil. A solenoid may be a direct current (DC) or alternating current (AC) solenoid. The movable portion of a solenoid is called a plunger or an armature. A relay is a solenoid set up to actuate switch contacts when its coil is energized.

A solenoid response time is a time delay between application of the current and initial movement of the plunger. A solenoid stroke time is the time when the plunger begins to move from its initial position and ends when it reaches its limit of travel. A solenoid pull-in time is the sum of response time and stroke time (i.e., the time required by the plunger to perform its work.) A solenoid drop-out delay is the time from current cut-out until the plunger starts to return to its initial position. A solenoid return time is the time from the beginning of plunger return motion until it has reached its initial position. A solenoid drop-out is the sum of drop-out delay and return.

A solenoid pull-in current is the minimum amount of coil current needed to actuate a solenoid or relay from its "normal" (de-energized) position. A solenoid drop-out current is the maximum coil current below which an energized solenoid or relay will return to its "normal" state.

In order for a solenoid to positively "pull in" the armature to actuate the contact(s), there must be a certain minimum amount of current through the coil. This minimum amount is called the pull-in current. Once the armature is pulled closer to the coil's center, however, it may take less magnetic field flux (less coil current) to hold it there. Therefore, the coil current must drop below a value lower than the pull-in current before the armature "drops out" to its de-energized position. This current level is called the drop-out current. The difference between pull-in and drop-out currents may form a hysteresis. Pull-in and drop-out currents (and voltages) vary widely from device to device, and are specified by the manufacturer.

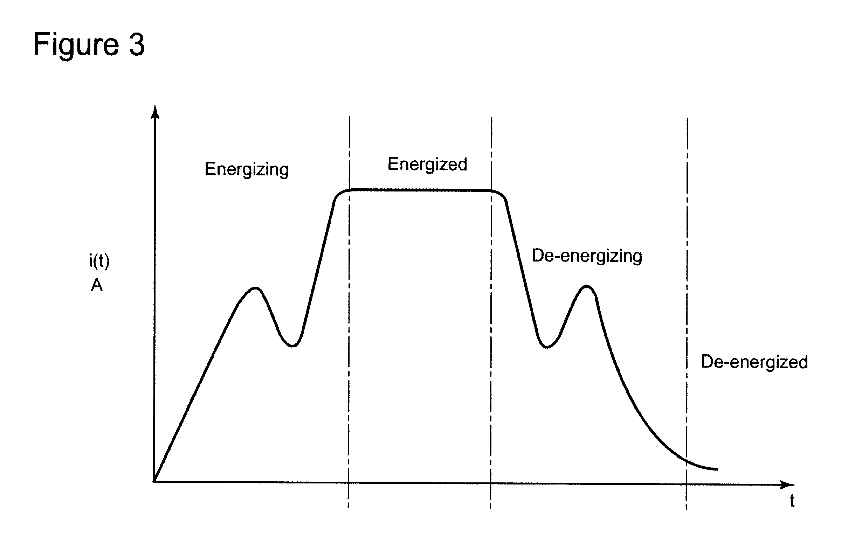

Figure 3 is a generic current profile of a solenoid. One skilled in the art would recognize that this generic current profile may be different from solenoid to solenoid. When the valve is being energized, a measurable dip in current occurs in the general vicinity of the midpoint of the exponential rise of the current curve. Similarly, a measurable dip occurs in the midpoint vicinity of the current decay when the valve is being de-energized. When the valve is fully energized, the solenoid plunger is held firm.

Changes in the precise shape and position of a valve's current profile may provide insights valve health. Thus, by observing changes in the current signature over time, valve health monitoring may be performed so that failures can be avoided. That is, early detection of current signature anomalies can be used to predict a valve failure, so as to enable valve replacement on a time schedule more convenient to well operators.

In deep well BOPs, there are two types of SEMs (Subsea Electronic Module) that may be employed: Generation I and Generation II SEMs. The major difference between Generation I and Generation II SEMs is the type of boards which are used collectively to provide electrical and software control of the Pods (solenoids).
Generation I SEM comprises one Network Node Processor (NNP) board, 1 Analog board, 1 Utility board 6 solenoid driver boards. Generation II SEM comprises 2 32-channel solenoid driver boards, 1 Analog board, 1 Auxiliary solenoid driver board, 1 VMIC 2540 timer board, 3 VMIC 3113-A boards, 1 VMIC 2128 board, 1 VMIC 7807 single board computer board with PMC 422 for serial I/O communication. With regards to solenoid current read back range (milli amperes - mA), for Generation I SEM, the range is from 0-10 mA (de-energized state of solenoid) to 400-500 mA (energized state of solenoid) and for Generation II SEM, the range is from 0-10 mA(de-energized state of solenoid) to around 400 - 500 mA (holding state of solenoid) and then after a few milli seconds, it reduces back to around 250 mA (energized state of solenoid). Basically, the read back current profile and the characteristics are different for the 2 types of SEMs as they use different types of boards which constitute different set of hardware components. Generation II SEMs use newer components with less failures compared to Generation I SEMs with older components. Since the current profiles are different ranges for Generation I SEMs compared to Generation II SEMs, the voltage profiles are also different (0.5 V to 15 V for Generation I SEMs and 5 V to 48 V for Generation II SEMs).

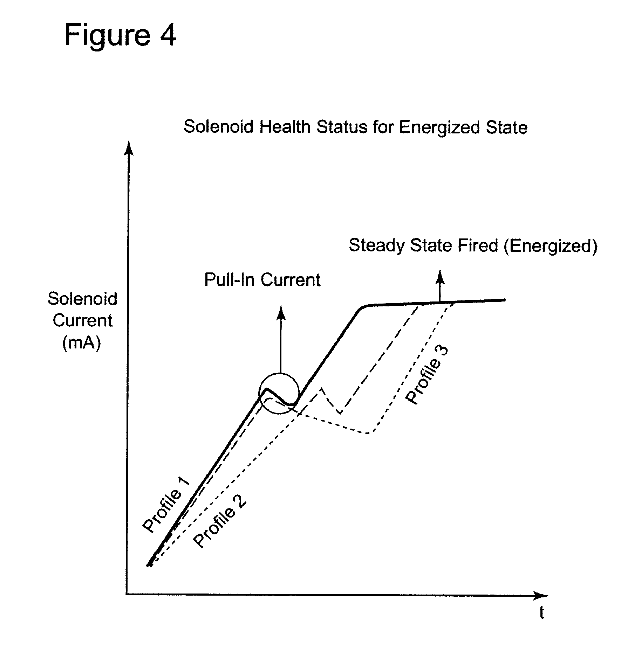

Figure 4 is a current profile of a Generation I SEM solenoid read back current being energized at different times during the life of the solenoid. Profile 1 is a current profile of a newly manufactured solenoid valve. Profiles 2-3 are current profiles obtained later in the life of the solenoid valve. In Profile 2, the timing of the current dip is delayed. In Profile 3, the duration of the dip is extended. Profiles 2-3 correspond to degraded valve and/or solenoid operations, possibly due to seat wear, debris build-up or other valve and/or solenoid failure mechanisms. Profiles 2-3 are illustrative only. Any manner of change in current profiles may be observed over the life of the valve. For example, the current value at the beginning of the dip may higher or lower as the valve degrades.

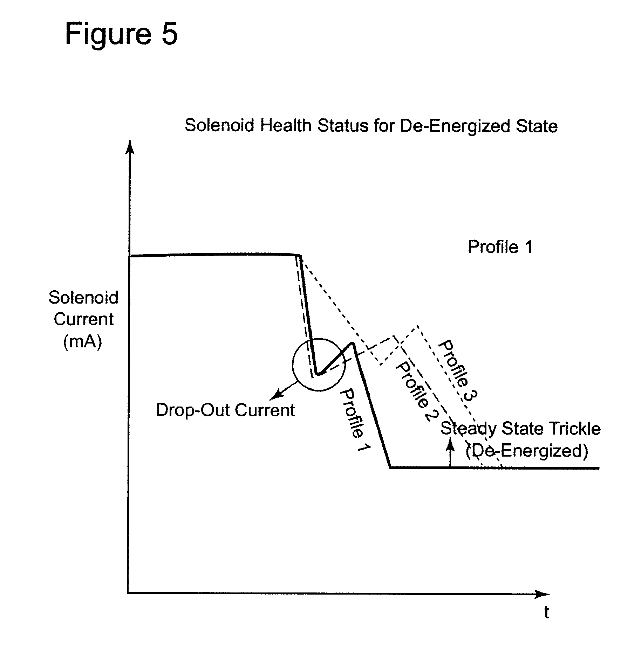

Figure 5 is a current profile of a Generation I solenoid being de-energized at different times during the life of the solenoid. Profile 1 is a current profile of a newly manufactured solenoid valve. Profiles 2-3 are current profiles obtained later in the life of the solenoid valve. In Profile 2, the timing of the current dip is delayed. In Profile 3, the duration of the dip is extended. As in Figure 4, Profiles 2-3 correspond to degraded valve and/or solenoid operations, possibly due to seat wear, debris build-up or other valve and/or solenoid failure mechanisms. As in Figure 4, Profiles 2-3 are illustrative only. Any manner of change in current profiles may be observed over the life of the valve. For example, the current value at the beginning of the dip may higher or lower as the valve degrades.

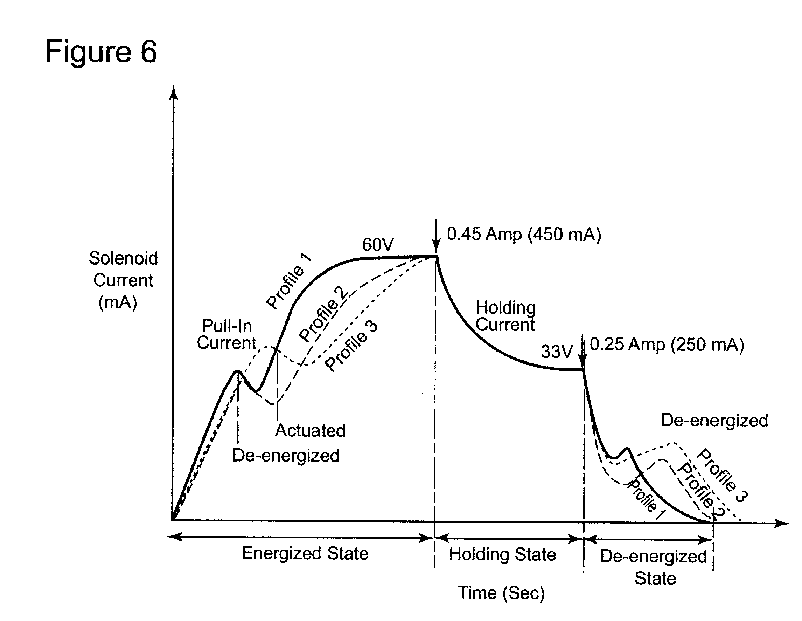

Figure 6 is a current profile of a Generation II solenoid being energized and de-energized at different times during the life of the solenoid. Profile 1 is a current profile of a newly manufactured solenoid valve. Profiles 2-3 are current profiles obtained later in the life of the solenoid valve. In Profile 2, the timing of both current dips is delayed. In Profile 3, the duration of the dips is extended. As in Figure 4, Profiles 2-3 correspond to degraded valve and/or solenoid operations, possibly due to seat wear, debris build-up or other valve and/or solenoid failure mechanisms. As in Figure 4, Profiles 2-3 are illustrative only. Any manner of change in current profiles may be observed over the life of the valve. For example, the current values at the beginning of the dips may higher or lower as the valve degrades. Also, Figure 6 identifies various voltage and amperage values. However, these values are illustrative only, as the values may vary according to type of solenoid or age/condition of the solenoid.

In deep well BOPs, there may be dozens of solenoid valve that may be operated and tested remotely (i.e., from the well platform). In one embodiment, there may be ninety-six (96) solenoid valves. To check the current profile of each of these solenoid valves, the conventional art remote monitor is limited to testing each valve manually through a control panel. Experience has shown that this takes too much time, particularly in crisis situations. To provide a rapid and accurate assessment of a plurality of solenoid valves in a deployed (e.g., submerged and installed) BOP, in one embodiment of the present invention, there is a control device on the well platform that is electrically connected to the plurality of solenoid valves on the BOP. The control device includes a processor that is connected to a memory. The memory stores one or more current profiles for each solenoid valve. These stored current profiles may include a manufacturer's provided profile for the specific solenoid valve or for a class of related solenoid valves, a pre-installation measured profile, and/or one or more profiles captured while the solenoid valve is installed in a submerged BOP.

The control device is accessed via a control panel (e.g., user interface displayed on a computer) located on platform. The control panel is configured to allow an operator to a) select one or more of the plurality of solenoid valves for testing; b) schedule the testing, including establishing a test cycle or schedule; and c) select one or more output modes (including a printed report, a visual alarm or indication, an audio alarm or indication, or a wired or wireless transmission to a remote location.) The control panel also is configured to allow an operator to set alarm thresholds for the current profile of one or more solenoid valves. The control unit obtains a current profile of the one or more solenoid valves, and compares the obtained profile to one or more of the stored current profiles and/or to the established thresholds.

With this comparison, changes may be detected visually or automatically based on predetermined threshold criteria. The threshold criteria may include the timing or duration of a current dip while energizing and/or de-energizing the solenoid. Pattern recognition software may be used to identify a defective or failed solenoid valve. The detected changes may be used by a technician or by the computing device (e.g., with a change detection program) to identify solenoid valves that are candidates for replacement prior to actual valve failure. The detected changes also may be used by a technician or by the computing device to predict an end-of-life of the corresponding solenoid valve(s). This prediction may be based solely on changes to the current profile or may be combined with historic or predicted valve duty cycles.

Alternatively, the comparison may result in one or more alarms, including a visual alarm, an audible alarm and a wired or wireless transmission to a remote location.

By being able to group in software one or more solenoid valves for testing, a more efficient and dynamic testing regime is possible, resulting in faster and safer equipment monitoring. In an embodiment, the control panel displays a list of valves, grouped by valve identifier or valve function or another characteristic. In an embodiment, the control panel displays a schematic of valves. The control panel is configured to allow the operator to select pre-defined groups of valves or to create groups of valves for testing. The control panel is also configured to allow the operator to select all valves and/or to deselect valves individually or by group. The control panel allows the operator to initiate testing through an immediate user action, and allows the operator to schedule testing of individual valves or groups of valves. The schedule may or may not include repeated testing on a schedule, or repeated testing if a test results is determined to suggest an existing or imminent valve failure or malfunction.

The above-described control panel may be installed on the platform or the vessel that controls the BOP. Alternatively, the control panel may be installed remotely from the platform and wirelessly connected to a companion device on the platform. The control panel may be a display on a special purpose device, or may be a display on a personal computer or related device (e.g., tablet computer, smart phone, etc.)

The control device discussed above may also be used for testing other devices on the BOP. Two examples of such a device are a flow meter and a pressure transducer, as discussed below.

A flow meter is a device that is used to measure either the velocity of a fluid or gas, the volumetric flow of the fluid or gas, or the mass flow of the fluid or gas. The petroleum industry typically employs a variety of flow meters (e.g., turbine and ultrasonic meters) to measure flow rate and other fluid/gas characteristics. The accuracy of such meters generally depends on the continuity and stability of the axial fluid velocity profiles to which they are subjected. Spatially discontinuous profiles or profiles that vary widely in time lead to unpredictable and hence unacceptable variations in the calibrations of such meters.

As with solenoid valves, a BOP may include many flow meters. To provide a rapid and accurate assessment of a plurality of flow meters in a deployed (e.g., submerged and installed) BOP, in one embodiment of the present invention, there is a control device on the well platform that is electrically connected to the plurality of flow meters on the BOP. The control device includes a processor that is connected to a memory. The memory stores one or more flow profiles for each flow meter. These stored flow profiles may include a manufacturer's provided profile for the specific flow meter or for a class of related flow meter, a pre-installation measured profile, and/or one or more profiles captured while the flow meter is installed in a submerged BOP. The control device is accessed via a control panel located on platform. The control panel is configured to allow an operator to a) select one or more of the plurality of flow meter for testing; b) schedule the testing, including establishing a test cycle or schedule; and c) select one or more output modes (including a printed report, a visual alarm or indication, an audio alarm or indication, or a wired or wireless transmission to a remote location.) The control panel also is configured to allow an operator to set alarm thresholds for the flow profile of one or more flow meter. The control unit obtains a flow profile of the one or more flow meter, and compares the obtained profile to one or more of the stored flow profiles and/or to the established thresholds. This comparison may result in an alarm and/or is output for further analysis. By being able to group one or more flow meter for testing, a more efficient and dynamic testing regime is possible, resulting in faster and safer equipment monitoring.

As with solenoid valves, a BOP may include many pressure transducers. To provide a rapid and accurate assessment of a plurality of pressure transducers in a deployed (e.g., submerged and installed) BOP, in one embodiment of the present invention, there is a control device on the well platform that is electrically connected to the plurality of pressure transducers on the BOP. The control device includes a processor that is connected to a memory. The memory stores one or more pressure profiles for each pressure transducer. These stored pressure profiles may include a manufacturer's provided profile for the specific pressure transducer or for a class of related pressure transducer, a pre-installation measured profile, and/or one or more profiles captured while the pressure transducer is installed in a submerged BOP. The control device is accessed via a control panel located on platform. The control panel is configured to allow an operator to a) select one or more of the plurality of pressure transducer for testing; b) schedule the testing, including establishing a test cycle or schedule; and c) select one or more output modes (including a printed report, a visual alarm or indication, an audio alarm or indication, or a wired or wireless transmission to a remote location.) The control panel also is configured to allow an operator to set alarm thresholds for the pressure profile of one or more pressure transducer. The control unit obtains a pressure profile of the one or more pressure transducer, and compares the obtained profile to one or more of the stored pressure profiles and/or to the established thresholds. This comparison may result in an alarm and/or is output for further analysis. By being able to group one or more pressure transducer for testing, a more efficient and dynamic testing regime is possible, resulting in faster and safer equipment monitoring.

The above-described new current profiles may be obtained while the controller is submerged or while the controller/BOP is on deck for maintenance or repair.

The above-described comparisons may include comparisons of one or more complete solenoid energize/de-energize cycles, or may include comparisons of just a solenoid energize action or just a solenoid de-energize action.

In one embodiment, current profiles for the plurality of solenoid valves (e.g., for the 96 valves) may be compared to corresponding baseline profiles one-by-one, in series. In another embodiment, current profiles for the plurality of solenoid valves may be compared to corresponding baseline profiles via one or more groups. That is, in one embodiment, all 96 valves may be cycled simultaneously to obtain their corresponding real-world current profiles. These current profiles may then be simultaneously or near-simultaneously compared to corresponding stored current profiles by the computing device, so as to quickly identify which if any solenoid valves have current profiles indicative of actual or imminent failure. The above-described serial and parallel diagnostics may be performed based on a user input or in accordance with a schedule. The above-described serial and parallel diagnostics may be automatically repeated for one or more solenoid valves based on a user input or based on a result of the comparison with the corresponding stored current profile.

In another embodiment, testing based on solenoid current profiles may be replaced by or augmented with testing based on fluid use (e.g., gallon count) from flow meters associated with the solenoid valve. In this embodiment, a flow meter on the BOP may be used test functionality with gallon count ranges displayed by the computing device alongside corresponding solenoid firing indications to assist the rig personnel in detecting hydraulic/mechanical leaks in the stack equipment (e.g., annuluses). If the user or computer detects an inappropriate gallon count for a particular sequence of functions being fired, the user or computer can narrow down the problem to a particular set of functions, thus facilitating easier troubleshooting and/or repair/replacement.

In another embodiment, testing based on solenoid current profiles may be replaced by or augmented with testing based on pressures measured by pressure transducers (e.g., comparing measured pressure values to low and high pressure limits) to detect and diagnose any potential issues with the transducer or involved components. When there is 0 PSI pressure (no pressure) if the raw value was 200 PSI, it should not increase or decrease or show negative values over period of time and when we have the maximum pressure of 10,000 PSI, it should not show any negative or value greater than 10,000 PSI or any other incorrect large value.

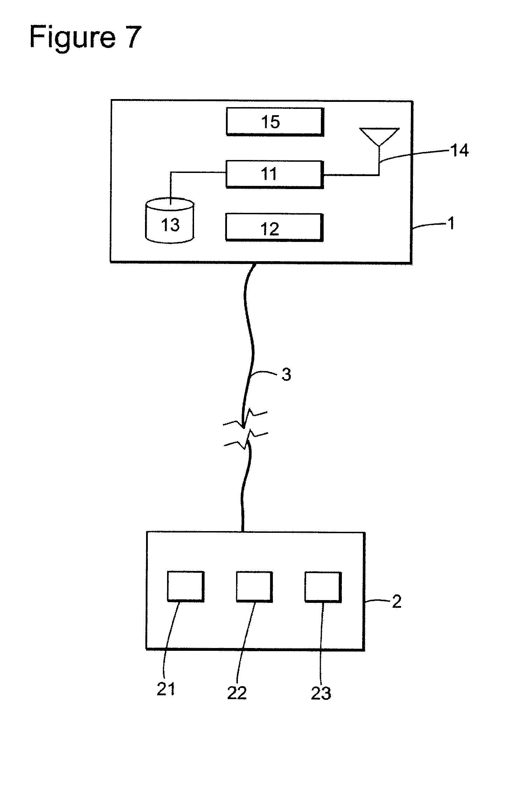

Figure 7 is a block diagram of a control system according to an embodiment of the invention. The control system includes a control device 1 connected to a deployed BOP 2 via an undersea electrical connection 3. The BOP 2 includes at least one of a group of solenoid valve 21, a group of flow meters 22 and a group of transducers 23. The control device includes a processor 11, an interface device 12 that connects the processor to the undersea electrical connection 3, a memory 13 that stores one or more BOP device profiles, a wireless communication device 14, and a display panel 15.

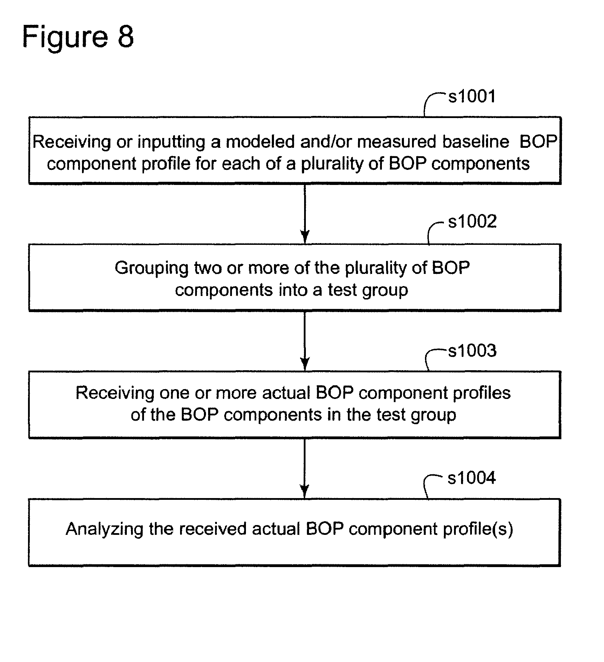

As shown in Figure 8, the disclosed exemplary embodiments provide a system and a method for controlling a subsea well in general, and solenoid valves in particular by a control device. The method includes receiving or inputting a modeled and/or measured baseline BOP component profile (e.g., a BOP solenoid current profile_ for each of a plurality of BOP components (e.g., for each of a plurality of solenoid valves) (S1001). If the baseline BOP component is a solenoid valve, the BOP component profiles include solenoid current profiles that each include at least one of a pull-in current profile and a drop-out current profile. The method further includes grouping two or more of the plurality of BOP components into a test group (S1002). The method further includes receiving, by the control device, one or more actual BOP component profiles (e.g., actual solenoid current profiles) from the grouped BOP components in the test group (S1003); and analyzing, by the control device, the actual BOP component profile(s) to determine if any of the grouped BOP components is operating out of specified norms, or whether the any of the grouped BOP components has experienced an actual failure or is liable to experience an imminent failure (S1004). The analysis may include comparing the measured profile(s) to one or more stored profiles (e.g., a stored baseline profile or a previously obtained actual profile). The analysis may include analyzing only a portion of the actual BOP component profiles (e.g., only the solenoid energizing or de-energizing current profiles), or analyzing an entirety of the actual BOP component profiles. The analysis may include performing automatic change detection analysis to identify changes in the profiles that are indicative of component wear or failure. The analysis may include predicting an end-of-life one or more of the BOP components based the change between the actual BOP component profiles and the one or more stored BOP component profiles. The end-of-life analysis may also take into consideration at least one of a historic BOP component duty cycle and a predicted BOP component duty cycle. In the above discussion, the BOP component may be a solenoid valve, a transducer, a flow meter or another device.

According to still another exemplary embodiment, there is a non-transitory computer readable medium containing instructions configured to cause a computing device to execute the method described above.

It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various aspects and embodiments of the present invention are defined by the following numbered clauses:
1. A method of monitoring components of a BOP of a subsea well by a control device located remotely from the BOP, comprising:
   grouping, by the control device, two or more of a plurality of BOP components into a test group;
   receiving, by the control device, one or more actual BOP component profiles from the grouped BOP components in the test group; and
   analyzing, by the control device, the received one or more actual BOP component profiles.
2. The method of clause, wherein the step of analyzing comprises one of:
   determining if any of the grouped BOP components is operating out of specified norms; and
   determining whether any of the grouped BOP components has experienced an actual failure or is liable to experience an imminent failure.
3. The method of clause 1 or clause 2, further comprising:
   storing, by the control device, a modeled and/or measured baseline BOP component profile for each of the two or more of a plurality of BOP components (S1001).
4. The method of any preceding clause, wherein the step of analyzing comprises:
   comparing the received one or more actual BOP component profiles to a corresponding one of the stored baseline BOP component profiles.
5. The method of any preceding clause, wherein the step of comparing comprises:
   performing an automatic change detection analysis to identify changes in the profiles that are indicative of component wear or failure.
6. The method of any preceding clause, wherein the step of analyzing comprises one of:
   analyzing only a portion of the received one or more actual BOP component profiles; and
   analyzing an entirety of the received one or more actual BOP component profiles.
7. The method of any preceding clause, wherein the step of analyzing comprises:
   predicting a BOP component end-of-life based on the received one or more actual BOP component profiles.
8. The method of any preceding clause, wherein the two or more of a plurality of BOP components comprise one of:
   two or more BOP transducers, and
   two or more BOP flow meters.
9. The method of any preceding clause, wherein the two or more of a plurality of BOP components comprise:
   two or more BOP solenoid valves,
   wherein each of the one or more actual BOP component profiles include at least a portion of a corresponding solenoid current profile.
10. The method of any preceding clause, further comprising one of:
   displaying, by the control device, the received one or more actual BOP component profiles;
   producing, by the control device, a visible or audible alarm based on the received one or more actual BOP component profiles;
   transmitting, by the control device, information related to the received one or more actual BOP component profiles to a remote device; and
   receiving, by the control device, control commands from the remote device.
11. A control device configured to remotely monitor components of a BOP of a subsea well, the control device comprising:
   an interface device configured to connect the control device to the BOP via an undersea electrical connection;
   a memory; a display panel; and
   a processor operatively connected to the interface device, the memory, and the display panel, wherein the processor is configured to,
      group two or more of a plurality of BOP components into a test group;
      receive one or more actual BOP component profiles from the grouped BOP components in the test group; and
      analyze the received one or more actual BOP component profiles.
12. The control device of any preceding clause, wherein the processor is configured to
   determine if any of the grouped BOP components is operating out of specified norms; or
   determine whether any of the grouped BOP components has experienced an actual failure or is liable to experience an imminent failure.
13. The control device of any preceding clause, wherein the memory is configured to store a modeled and/or measured baseline BOP component profile for each of the two or more of a plurality of BOP components.
14. The control device of any preceding clause, wherein the processor is configured to compare the received one or more actual BOP component profiles to a corresponding one of the stored baseline BOP component profiles.
15. The control device of any preceding clause, wherein the processor is configured to perform an automatic change detection analysis to identify changes in the profiles that are indicative of component wear or failure.
16. The control device of any preceding clause, wherein the processor is configured to:
   analyze only a portion of the received one or more actual BOP component profiles; or
   analyze an entirety of the received one or more actual BOP component profiles.
17. The control device of any preceding clause, wherein the processor is configured to predict a BOP component end-of-life based on the received one or more actual BOP component profiles.
18. The control device of any preceding clause, wherein the two or more of a plurality of BOP components comprise one of:
   two or more BOP transducers, and
   two or more BOP flow meters.
19. The control device of any preceding clause, wherein the two or more of a plurality of BOP components comprise:
   two or more BOP solenoid valves,
   wherein each of the one or more actual BOP component profiles include at least a portion of a corresponding solenoid current profile.
20. The control device of any preceding clause, the processor is configured to perform at least one of the following functions:
   display the received one or more actual BOP component profiles;
   produce a visible or audible alarm based on the received one or more actual BOP component profiles;
   transmit information related to the received one or more actual BOP component profiles to a remote device; and
   receive control commands from the remote device.
21. A system configured to remotely monitor components of a BOP of a subsea well, the system comprising:
   a subsea device including a BOP configured to close a bore that fluidly communicates with the subsea well; and
   a control device electrically connected to components of the BOP via an undersea electrical connection,
   wherein the control device includes
      an interface device configured to connect the control device to the BOP via an undersea electrical connection;
      a memory;
      a display panel; and
      a processor operatively connected to the interface device, the memory, and the display panel, wherein the processor is configured to
      group two or more of a plurality of BOP components into a test group;
      receive one or more actual BOP component profiles from the grouped BOP components in the test group; and
      analyze the received one or more actual BOP component profiles.
22. A method of monitoring components of a BOP of a subsea well by a control device software connected directly to the testing Pods, comprising:
   grouping, by the control device, two or more of a plurality of BOP components into a test group;
   receiving, by the control device, one or more actual BOP component profiles from the grouped BOP components in the test group; and
   analyzing, by the control device, the received one or more actual BOP component profiles.

## Claims

1. A method of monitoring components of a BOP of a subsea well by a control device located remotely from the BOP, comprising:
grouping, by the control device, two or more of a plurality of BOP components into a test group;
receiving, by the control device, one or more actual BOP component profiles from the grouped BOP components in the test group; and
analyzing, by the control device, the received one or more actual BOP component profiles.

2. The method of claim 1, wherein the step of analyzing comprises one of:
determining if any of the grouped BOP components is operating out of specified norms; and
determining whether any of the grouped BOP components has experienced an actual failure or is liable to experience an imminent failure.

3. The method of claim 1 or claim 2, further comprising:
storing, by the control device, a modeled and/or measured baseline BOP component profile for each of the two or more of a plurality of BOP components (S1001).

4. The method of any preceding claim, wherein the step of analyzing comprises:
comparing the received one or more actual BOP component profiles to a corresponding one of the stored baseline BOP component profiles.

5. The method of any preceding claim, wherein the step of comparing comprises:
performing an automatic change detection analysis to identify changes in the profiles that are indicative of component wear or failure.

6. The method of any preceding claim, wherein the step of analyzing comprises one of:
analyzing only a portion of the received one or more actual BOP component profiles; and
analyzing an entirety of the received one or more actual BOP component profiles.

7. The method of any preceding claim, wherein the step of analyzing comprises:
predicting a BOP component end-of-life based on the received one or more actual BOP component profiles.

8. The method of any preceding claim, wherein the two or more of a plurality of BOP components comprise one of:
two or more BOP transducers, and
two or more BOP flow meters.

9. The method of any preceding claim, wherein the two or more of a plurality of BOP components comprise:
two or more BOP solenoid valves,
wherein each of the one or more actual BOP component profiles include at least a portion of a corresponding solenoid current profile.

10. The method of any preceding claim, further comprising one of:
displaying, by the control device, the received one or more actual BOP component profiles;
producing, by the control device, a visible or audible alarm based on the received one or more actual BOP component profiles;
transmitting, by the control device, information related to the received one or more actual BOP component profiles to a remote device; and
receiving, by the control device, control commands from the remote device.

11. A control device configured to remotely monitor components of a BOP of a subsea well, the control device comprising:
an interface device configured to connect the control device to the BOP via an undersea electrical connection;
a memory;
a display panel; and
a processor operatively connected to the interface device, the memory, and the display panel, wherein the processor is configured to,
group two or more of a plurality of BOP components into a test group;
receive one or more actual BOP component profiles from the grouped BOP components in the test group; and
analyze the received one or more actual BOP component profiles.

12. The control device of claim 11, wherein the processor is configured to
determine if any of the grouped BOP components is operating out of specified norms; or
determine whether any of the grouped BOP components has experienced an actual failure or is liable to experience an imminent failure.

13. The control device of claim 11 or claim 12, wherein the memory is configured to store a modeled and/or measured baseline BOP component profile for each of the two or more of a plurality of BOP components.

14. A system configured to remotely monitor components of a BOP of a subsea well, the system comprising:
a subsea device including a BOP configured to close a bore that fluidly communicates with the subsea well; and
a control device electrically connected to components of the BOP via an undersea electrical connection,
wherein the control device includes
an interface device configured to connect the control device to the BOP via an undersea electrical connection;
a memory;
a display panel; and
a processor operatively connected to the interface device, the memory, and the display panel, wherein the processor is configured to
group two or more of a plurality of BOP components into a test group;
receive one or more actual BOP component profiles from the grouped BOP components in the test group; and
analyze the received one or more actual BOP component profiles.

15. A method of monitoring components of a BOP of a subsea well by a control device software connected directly to the testing Pods, comprising:
grouping, by the control device, two or more of a plurality of BOP components into a test group;
receiving, by the control device, one or more actual BOP component profiles from the grouped BOP components in the test group; and
analyzing, by the control device, the received one or more actual BOP component profiles.
